# EUROPEAN PATENT APPLICATION

(11) **EP 3 812 208 A1**
(43) Date of publication of application: **28.04.2021**
(21) Application number: 19821948.7
(22) Date of filing: 11.06.2019
(51) Int. Cl.: B60N 3/00, B60N 2/70, A63G 31/02, B60J 7/08, B62C 1/00

(54) **ROCKING CART TABLE**

(30) Priority: 22.06.2018 KR 20180072145
(71) Applicant: Kwon, Kwang Hee, Gapyeong-gun, Gyeonggi-do 12430 (KR)
(72) Inventor: Kwon, Kwang Hee, Gapyeong-gun, Gyeonggi-do 12430 (KR)
(74) Representative: Hübner, Gerd
(86) International application number: PCT/KR2019/006997
(87) International publication number: WO 2019/245213

(57) **Abstract**

Disclosed is a rocking cart table, which is moved forward/backward and in a seesaw manner by passenger's motion and thus can provide enjoyment following play through a rock to the passenger. The cart table comprises: a cart body installed on a rail and moved forward and backward by passenger's motion; a seesaw movement member moved in a seesaw manner by the passenger's motion; a table member; and a light-blocking member.

## Description

### Technical Field

The present invention relates to a rocking cart table, and more specifically, to a rocking cart table that can maximize the shaking by the movement of an occupant.

### Background Art

In general, wagons refer to horse-drawn wagons, and are classified into vans, stage wagons, stand wagons, excursion wagons, rental wagons, private wagons, and freight wagons that carry people, depending on the purpose of use.

Since such a wagon is not used for any other purpose other than for carrying people or cargo or selling food or goods, the utility is gradually decreasing in the modern society.

Accordingly, there is a need for research and development on a cart table that allows an occupant to enjoy play by shaking the cart by their own movement, while constructing a space where meals and rest are possible to increase the usability.

### Disclosure

### Technical Problem

To solve the problems described above, an object of the present invention is to provide a rocking cart table that can move forward/backward and seesaw by the movement of an occupant to provide a joy of play through shaking to the occupant, and contribute to health improvement by naturally inducing movement through the movement of the occupant.
[6] In addition, another object of the present invention is to provide a rocking cart table that can provide a rest area without inconvenience even during the day/night to an occupant by operating various electric devices through self-generation.
[7] Objects of the present invention may not be limited to the above, and other objects will be clearly understandable to those having ordinary skill in the art from the following disclosures.

### Technical Solution

According to the present invention, there is provided a rocking cart table which includes a rail having a predetermined length; a cart body installed on the rail and moving forward and backward along the rail by a movement of a passenger; seesaw movement members installed to correspond to each other on the cart body to seesaw-move by the movement of the passenger; a table member installed between the seesaw movement members; and a light blocking member installed on the cart body to protect an occupant from sunlight.

### Advantageous Effects

According to the rocking cart table of the present invention, by maximizing the shaking by the mutual organic combination structure of the cart body moving forward/backward along the rail by the movement of an occupant and the seesaw movement member, it is possible to give the enjoyment of play to the occupant through shaking, and naturally guide the movement of the occupant thereby to contribute to health improvement.

In addition, the cart body may be moved forward/backward along the rail by the force transmitted by the seesaw movement operation of an occupant, thereby providing dynamic pleasure to the occupant.

In addition, the rocking cart table according to the present invention provides an electric device operable by self-generation, so that it is possible to contribute to energy saving while providing convenience to an occupant using the rocking cart table.

### Description of Drawings

FIG. 1 is a perspective view showing the overall configuration of a rocking cart table according to the present invention.
FIG. 2 is a perspective view showing the rail of a rocking cart table according to the present invention.
FIG. 3 is a cross-sectional view showing the inside of a rocking cart table according to the present invention.
FIG. 4 is a side view showing the overall configuration of the seesaw movement member provided on a rocking cart table according to the present invention.
FIG. 5 is a view illustrating a use state in which a rocking cart table according to the present invention moves forward/backward.
FIG. 6 is a view illustrating a use state in which decorative cart wheels are installed on a rocking cart table according to the present invention.
FIG. 7 is a view illustrating a seesaw movement state of a rocking cart table according to the present invention.

### Best Mode

### Mode for Invention

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Throughout the specification, when some part 'includes' some elements, unless explicitly described to the contrary, it means that other elements may be further included but not excluded. In addition, the terms '-part', '-unit', module' and 'device' described in the specification mean units for processing at least one function or operation, which can be implemented by hardware or software and any combination thereof.

In the specification, a term "and/or" should be understood to include all combinations which can be presented from one or more pertinent items. For example, "a first item, a second item, and/or a third item" means "at least one or more of the first item, the second item, and the third item" and means a combination of all items which can be presented from two or more of not only the first, second, or third item, but the first, second, and third items.

Hereinafter, an embodiment of the present invention will be described with reference to the drawings.

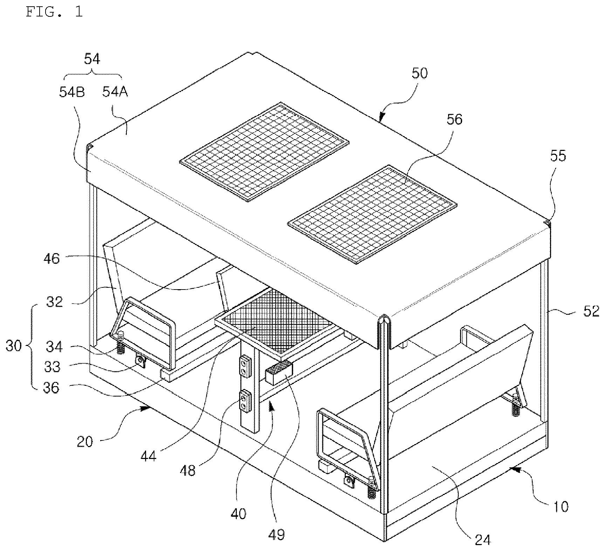

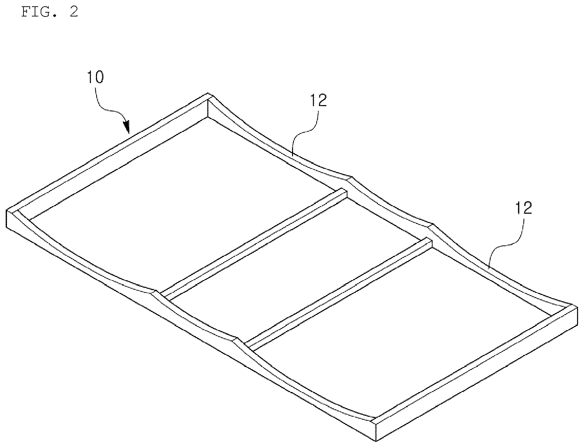

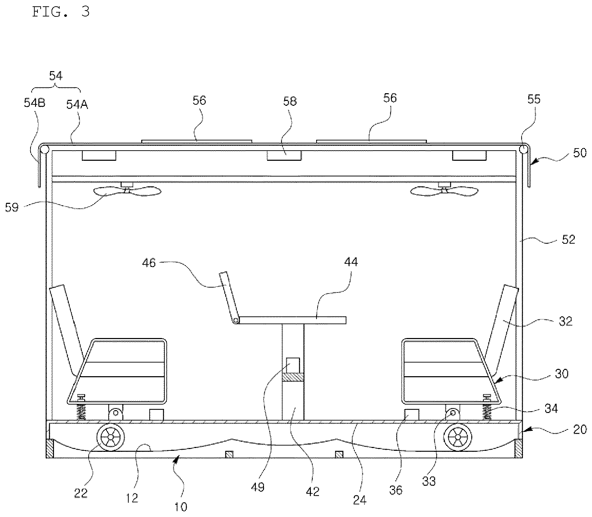

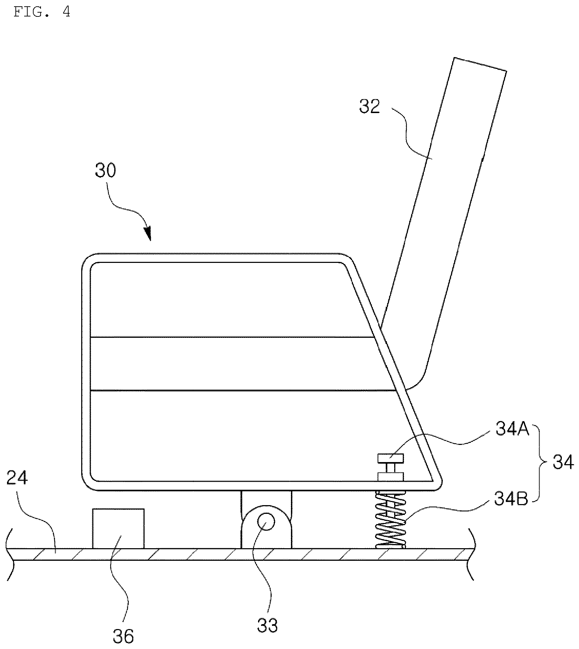

FIG. 1 is a perspective view showing the overall configuration of a rocking cart table according to the present invention. FIG. 2 is a perspective view showing the rail of a rocking cart table according to the present invention. FIG. 3 is a cross-sectional view showing the inside of a rocking cart table according to the present invention. FIG. 4 is a side view showing the overall configuration of the seesaw movement member provided on a rocking cart table according to the present invention.

As shown in FIG. 1, a rocking cart table according to the present invention includes a cart body 20 installed on a rail 10, a seesaw movement member 30, a table member 40, and a light blocking member 50.

According to the rocking cart table of the present invention, the cart body 20 is moved forward/backward along the rail 10 by the movement of an occupant, and the seesaw movement member 30 is moved by itself in the cart body, so that it is possible to provide a swaying state to the occupant through the forward/backward movement and seesaw movement.

As shown in FIG. 2, the rail 10 is formed to guide the forward/backward movement of the cart body 20. To this end, the rail 10 is formed to have a predetermined length, and guide parts 12 having a constant curvature are formed in both regions corresponding to each other with respect to the center in the longitudinal direction. The guide part 12 serves to guide the forward/backward movement of the cart body 20. The rail 10 may produce a shaking state during the forward/backward movement of the cart body 20 by the structure of the guide part 12.

As shown in FIG. 3, the cart body 20 is installed on the rail 10 so as to move forward/backward by the movement of the occupant. In addition, the cart body 20 is equipped with a wheel 22 disposed on the guide part 12 of the rail 10 at the lower portion thereof. When the occupant moves, the wheel 22 may move along the guide part 12 of the rail 10, so that the cart body 20 moves forward/backward. That is, the guide part 12 of the rail 10 is formed to have a predetermined curvature, and the cart body 20 is installed on the guide part 12 through the wheel 22, so that the force generated when the occupant moves is transferred to the wheel 22 and the cart body 20 moves forward/backward along the guide part 12, thereby providing a certain vibration to the occupant during the forward/backward movement process.

As shown in FIG. 4, the seesaw movement member 30 is provided to seesaw-move due to the movement of the occupant on the cart body 20, and includes a chair 32, an elastic support part 34, and a stopper 36.

The chair 32 is connected to a bottom plate 24 via a hinge 33 of the cart body 20 and is formed to enable an occupant to sit therein. In this case, the chairs 32 are installed on the bottom plate 24 to correspond to each other while being spaced apart from each other by a predetermined interval. In addition, the chair 32 is detachably coupled to the bottom plate 24, and thus, it is possible to increase compatibility with other chairs while securing ease of replacement in case of failure.

The elastic support part 34 is installed to be composed of a combination of a bolt 34A and a spring 34B on one lower side of the chair 32. The elastic support part 34 has a structure in which the spring 34B alleviates the impact acting on one side of the chair 32 during the seesaw movement around the hinge 33 while the occupant sits in the chair.

In this case, the bolt 34A is screw-coupled to the chair 32 to be connected to the spring 34B and is configured to adjust the seesaw movement angle of the chair seesaw-moving around the hinge 33. That is, the bolt 34A is able to adjust the seesaw movement angle of the chair 32 by adjusting the distance from the bottom plate 24 according to the operation of the occupant.

In addition, the spring 34B is installed to be connected to the bolt 34A, and accordingly, it is possible to buffer the shock transmitted to the chair 32 during the seesaw movement of the user. That is, the spring 34B is connected to the bolt 34A to be supported by the bottom plate 24.

The stopper 36 is installed on the bottom plate 24 to be disposed on the other lower side of the chair 32 corresponding to the elastic support part 34. That is, the stopper 36 may be installed at a predetermined height on the bottom plate 24, and accordingly, the chair 32 may be restricted from inclining more than a predetermined angle toward the table member 40 according to the seesaw movement of the user.

As shown in FIGS. 1 and 3, the table member 40 is provided to enable various foods or objects to be placed thereon, and includes a support frame 42 and a top plate 44.

The support frame 42 is installed at a predetermined height on the bottom plate 24 of the cart body 20, and the top plate 44 is connected to an upper portion of the support frame 42 to have a predetermined surface area.

The top plate 44 may be formed in a mesh-type structure to prevent contamination when placing various foods or objects while preventing injury due to damage and breakage due to external impact.

However, the mesh-type structure is for the convenience of LED lighting installation, or like, and the embodiment is not limited to the mesh-type structure.

In addition, a monitor-type computer 46 is installed in the table member 40 such that an occupant on board the cart body 20 may smoothly search for information during rest. In this case, the computer 46 may be installed in a foldable structure.

In addition, the table member 40 is provided with an electric outlet 48 capable of supplying power to various portable devices of an occupant on board the cart body 20 and a speaker 49 capable of providing sound. In this case, the speaker 49 may include a Bluetooth speaker used wirelessly as well as a general speaker used by wire.

As shown in FIGS. 1 and 3, the light blocking member 50 is provided to protect the occupant from sunlight, and includes a support frame 52 and a light blocking film 54.

The support frame 52 is installed to be connected to the cart body 20.

The light blocking film 54 is installed on the support frame 52 to completely cover the upper region of the cart body 20.

In this case, the light blocking film 54 may include an upper light blocking film 54A and a sidewall light blocking film 54B formed along the circumference of the upper light blocking film 54A. The sidewall light blocking film 54B is installed on a winding roll 55 driven by a motor such that the sidewall light blocking film 54B may be operated to be automatically folded and unfolded.

The light blocking member 50 has a structure of protecting the occupants on board the cart body 20 from strong sunlight. In addition, the light blocking member 50 may protect the occupant even in rain.

In addition, a solar panel 56 capable of generating power by condensing sunlight may be installed on the light blocking film 54. An electric device such as a lighting device 58 or a fan 59 that is operated by the power of the solar panel 56 may be installed on the support frame 52. Such an electric device receives power from an electrical outlet 48 installed on the table member 40.

In this case, the lighting device 58 may include all known lighting lamps including fluorescent lamps, incandescent lamps, LED lamps, etc. In this case, the lighting device 58 may be installed inside the light blocking member 50, installed outside the light blocking member 50, or both inside and outside the light blocking member 50. The fan 59 may be installed on the support frame 52 to allow angle adjustment. In addition, various known electric devices that can be used during meals, play, and rest may be installed on the support frame 52.

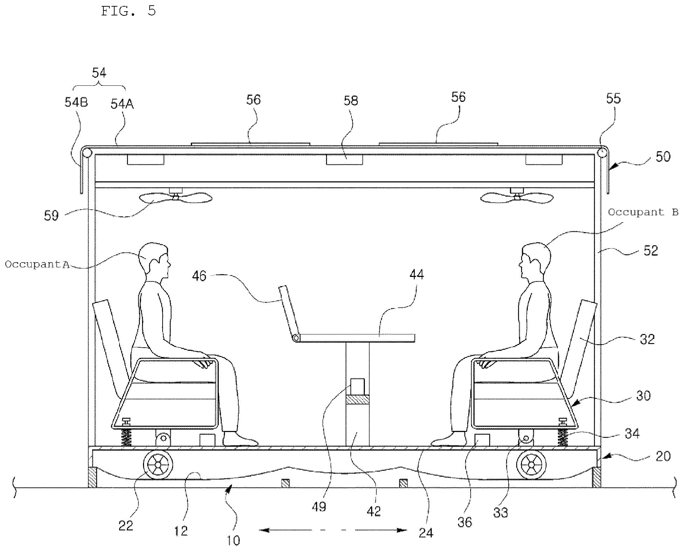

Hereinafter, the operation of the rocking cart table according to the present invention will be described with reference to FIGS. 5 to 7.

FIG. 5 is a view illustrating a use state in which a rocking cart table according to the present invention moves forward/backward. As shown, when occupants move in the longitudinal direction of the rail 10 while sitting in the chairs 32 of the seesaw movement member 30 to face each other, the cart body 20 moves slowly in the direction in which the movements of the occupants act.

The cart body 20 is arranged on the guide part 12 of the rail 10 via the wheel 22. In this structure, the wheel 22 moves along the guide part 12 by the force generated when an occupant moves, so that the art body 20 may move forward/backward in the length direction of the rail 10.

That is, the cart body 20 moves forward/backward along the rail 10 by the force acting from occupant A, and forward/backward along the rail 10 by the force acting from occupant B.

Accordingly, the cart body 20 may provide a constant vibration to the occupant due to the curvature structure of the guide part 12 in the process of moving forward/backward along the rail 10 by the repeated movement of occupants A and B. This is possible because the guide part 12 is formed to have a predetermined curvature in a state in which the guide parts 12 are arranged to correspond to each other in both regions of the rail 10.

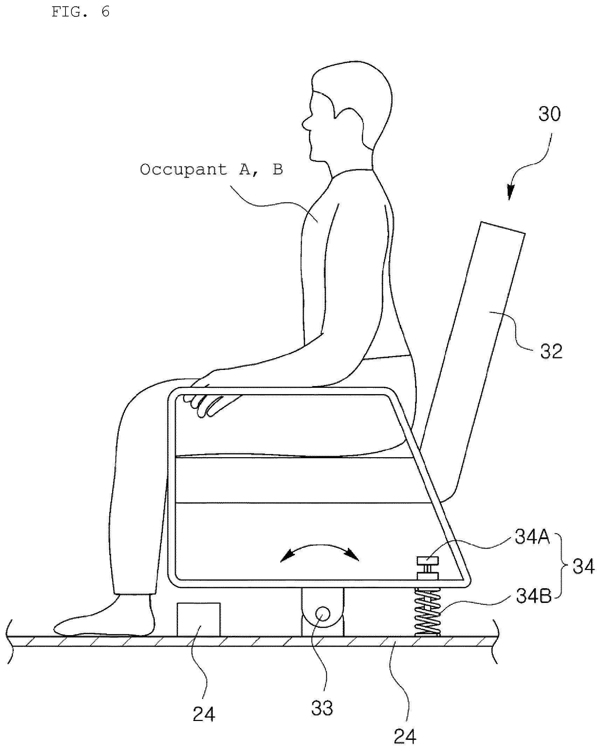

FIG. 6 is a view illustrating a using state in which decorative cart wheels are installed on a rocking cart table according to the present invention. As shown, decorative carriage wheels 26 are installed on both sides of the cart body 20, and a plurality of lighting lamps 28 are installed on the surfaces of the decorative carriage wheels 26. When the cart body 20 moves along the rail 10, the lighting lamps 28 are turned on, so that the occupant may naturally produce a feeling as if he is actually on a carriage while improving the enjoyment of play.

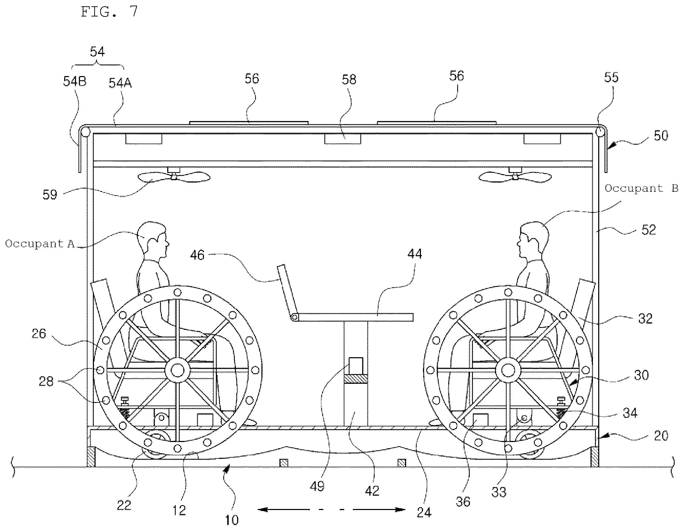

FIG. 7 is a view illustrating a seesaw movement state of a rocking cart table according to the present invention. As shown in the drawing, when an occupant moves a body of the occupant in the front and rear directions of the chair 32 provided on the seesaw movement member 30, the chair 32 seesaw-moves around the hinge 33. In this case, the chair 32 is adjusted to an optimal angle for the seesaw movement by the elastic support part 34 and the stopper 36, so that the user may perform stable seesaw movement.

That is, the elastic support part 34 may adjust the seesaw movement angle by adjusting the distance from the bottom plate 24 by the bolt 34A during seesaw movement around the hinge 33 while an occupant sits in the chair 32. The spring 34B may mitigate the impact acting on one side of the chair.

In addition, the stopper 36 may restrict the chair 32 from tilting toward the table member 40 by a certain angle or more according to the seesaw movement of the occupant, thereby securing stability during the seesaw movement of the seesaw movement member 30.

Accordingly, the seesaw movement member 30 seesaw-moves by itself while the cart body 20 moves forward/backward in the length direction of the rail 10 by the movement of the occupant, so that it is possible to maximize the shaking structure when the occupant moves.

As described above, the present invention should be understood that numerous other modifications and embodiments can be devised by those skilled in the art, and the spirit and scope of the principles of the present invention will fall within the scope of the appended claims.

### Industrial Applicability

The present invention, which relates to a rocking cart table, may provide seesaw movement according to the movement of an occupant to maximize the shaking, so that it is possible to give the enjoyment of play to the occupant and naturally guide the movement of the occupant to contribute to health improvement.

## Claims

1. A rocking cart table comprising: a rail having a predetermined length; a cart body installed on the rail and moving forward and backward along the rail by a movement of a passenger; seesaw movement members installed to correspond to each other on the cart body to seesaw-move by the movement of the passenger; a table member installed between the seesaw movement members; and a light blocking member installed on the cart body to protect an occupant from sunlight.

2. The rocking cart table of claim 1, wherein the rail further includes a guide part configured to have a predetermined curvature in opposite side areas corresponding to each other based on a central portion in a longitudinal direction of the rail to guide forward and backward movement of the cart body.

3. The rocking cart table of claim 2, wherein the cart body is provided with a wheel disposed on the guide part, and the wheel is moved forward and backward along the guide part by movement of an occupant such that the cart body provides vibration by the curvature of the guide part.

4. The rocking cart table of claim 1, wherein the seesaw movement member includes: a pair of chairs connected to a bottom plate of the cart body via a hinge and installed to correspond to each other to enable an occupant to sit thereon; an elastic support part installed on a lower side of each of the pair of chairs to relieve an impact when the pair of chairs are seesaw-moved around the hinge; and a stopper disposed on an opposite lower side of each of the pair of chair to correspond to the elastic support part and installed at a predetermined height on the bottom plate, wherein a seesaw movement angle of each of the pair of chairs is adjusted by the elastic support part and the stopper.

5. The rocking cart table of claim 4, wherein the elastic support part is installed to be supported on the bottom plate by a combination of a bolt and a spring, and the seesaw movement angle of each of the pair of chairs is adjusted depending on an operation of the bolt.

6. The rocking cart table of claim 1, wherein the table member includes a support frame installed at a predetermined height on the bottom plate of the cart body; and a top plate of a mesh structure installed to be supported by the support frame.

7. The rocking cart table of claim 1, wherein the light blocking member includes a support frame installed on the cart body; and a light blocking film installed on the support frame to cover an upper area of the cart body.

8. The rocking cart table of claim 7, wherein the light blocking film includes an upper-light blocking film covering an upper portion of the cart body; and a sidewall light-blocking film disposed along a periphery of the upper light-blocking film, and the light blocking member further includes one or more solar panels installed on the upper light-blocking film to condense sunlight.

9. The rocking cart table of claim 1, further comprising: an electrical outlet installed on the table member to supply power; a speaker installed on the table member to provide sound; and a lighting device installed inside/outside the light blocking member.

10. The rocking cart table of claim 1, further comprising: decorative wheels installed on two corresponding sides of the cart body; respectively, wherein a plurality of light lamps are installed on the decorative wheels.
